(19) Europäisches Patentamt / European Patent Office / Office européen des brevets

(11) EP 2 325 250 A1

(12) **EUROPEAN PATENT APPLICATION**
published in accordance with Art. 153(4) EPC

(43) Date of publication:
**25.05.2011 Bulletin 2011/21**

(21) Application number: **09813176.6**

(22) Date of filing: **09.09.2009**

(51) Int Cl.:
***C08L 23/26*** *(2006.01)* ***B32B 27/30*** *(2006.01)*
***B32B 27/32*** *(2006.01)* ***C08J 7/04*** *(2006.01)*
***C08L 23/08*** *(2006.01)* ***C08L 33/04*** *(2006.01)*

(86) International application number:
**PCT/JP2009/066057**

(87) International publication number:
**WO 2010/030033 (18.03.2010 Gazette 2010/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **12.09.2008 JP 2008235352**

(71) Applicant: **Sumitomo Chemical Company, Limited**
**Tokyo 104-8260 (JP)**

(72) Inventors:
- **NAGANO, Masashi**
**Sakai-shi**
**Osaka 599-8121 (JP)**
- **HIGO, Mutsuko**
**Toyonaka-shi**
**Osaka 560-0026 (JP)**
- **MORIMOTO, Junji**
**Toyonaka-shi**
**Osaka 560-0021 (JP)**
- **TAKEI, Tsuyoshi**
**Ichihara-shi**
**Chiba 299-0125 (JP)**
- **SOGOH, Kenji**
**Sodegaura-shi**
**Chiba 299-0241 (JP)**

(74) Representative: **Vossius & Partner**
**Siebertstrasse 4**
**81675 München (DE)**

(54) **AQUEOUS EMULSION**

(57) An emulsion comprising the following (A), (B) and (C):
(A) an olefinic copolymer comprising a structural unit derived from ethylene and/or a linear α-olefin and a structural unit derived from a vinyl compound represented by the formula (I):

$$CH_2=CH\text{-}R \qquad (I)$$

wherein R represents a secondary alkyl group, a tertiary alkyl group or a alicyclic hydrocarbon group,
or
a polymer obtained by graft polymerizing an α,β-unsaturated carboxylic acid anhydride to the olefinic copolymer,
(B) an acrylic resin comprising a structural unit derived from an a, α,β-unsaturated carboxylic acid and a structural unit derived from an α,β-unsaturated carboxylic acid ester,
(C) water.

EP 2 325 250 A1

## Description

Technical Field

The present invention relates to an aqueous emulsion and the like.

Background Art

Polypropylene is used for automobile parts such as a bumper, etc. because it has superior workability, strength and the like. Coating materials are usually applied on the automobile parts for decoration or the like.

The other materials such as coating materials are difficult to adhere on a surface of polypropylene, and therefore, it is usually conducted that a chlorinated polyolefin having a superior adhesiveness to polypropylene is applied onto a polypropylene followed by applying coating materials thereon (e.g. Patent Document 1).

[Prior Art Document]

[Patent Document]

[Patent Document 1] JP Heisei 5-7832 A ([Scope of Claims])

Summary of the Invention

A chlorinated polyolefin has chlorine atoms, and therefore, it has a problem that disposing polypropylene is cumbersome because of generating hydrochloric acid gas or the like when polypropylene on which the chlorinated polyolefin was applied has been burned. Materials other than the chlorinated polyolefins which have a superior adhesiveness to polypropylene are desired.

Under these circumstances, the present inventors reached to the inventions as shown in the following [1] to [13].

[1] An emulsion comprising the following (A), (B) and (C):

(A) an olefin copolymer comprising a structural unit derived from ethylene and/or a linear α-olefin and a structural unit derived from a vinyl compound represented by the formula (I):

$$CH_2\text{-}CH\text{-}R \qquad (I)$$

wherein R represents a secondary alkyl group, a tertiary alkyl group or a alicyclic hydrocarbon group,
or
a polymer obtained by graft polymerizing an α,β-unsaturated carboxylic acid anhydride to the olefin copolymer,
(B) an acrylic resin comprising a structural unit derived from an α,β-unsaturated carboxylic acid and a structural unit derived from an α,β-unsaturated carboxylic acid ester,
(C) water.

[2] The aqueous emulsion according to [1], wherein MFR of (A) at 190˚C and 2.16 kgf is 10 to 300.
[3] The aqueous emulsion according to [1] or [2], wherein the vinyl compound represented by the formula (I) is vinylcyclohexane.
[4] The aqueous emulsion according to any of [1] to [3], wherein the structural unit derived from an α,β-unsaturated carboxylic acid in (B) is a structural unit derived from at least one α,β-unsaturated carboxylic acid selected from the group consisting of acrylic acid and methacrylic acid.
[5] The aqueous emulsion according to any of [1] to [4], wherein the structural unit derived from an α,β-unsaturated carboxylic acid ester in (B) is a structural unit derived from at least one α,β-unsaturated carboxylic acid ester selected from the group consisting of acrylic acid alkyl ester and methacrylic acid alkyl ester.
[6] The aqueous emulsion according to any of [1] to [5], wherein the structural unit derived from an α,β-unsaturated carboxylic acid ester in (B) is a structural unit derived from an α,β-unsaturated carboxylic acid ester obtained from an aliphatic alcohol having 1 to 10 carbon atoms and a carboxylic acid group, and an α,β-unsaturated carboxylic acid.
[7] The aqueous emulsion according to any of [1] to [5], wherein the structural unit derived from an α,β-unsaturated carboxylic acid ester in (B) is a structural unit derived from an α,β-unsaturated carboxylic acid ester obtained from

an aliphatic alcohol having 1 to 10 carbon atoms and an amino group, and an α,β-unsaturated carboxylic acid.
[8] The aqueous emulsion according to [7], wherein (B) is an acrylic resin comprising a structural unit derived from an α,β-unsaturated carboxylic acid and a structural unit derived from an α,β-unsaturated carboxylic acid ester obtained from an aliphatic alcohol having 1 to 10 carbon atoms and an amino group, and an α,β-unsaturated carboxylic acid, and the sum of the amino groups contained in the resin is less than sum of the carboxylic acid groups contained in the resin.
[9] The aqueous emulsion according to any of [1] to [8], wherein (B) further comprises an ammonium cation.
[10] A cured product obtained by drying the aqueous emulsion according to any of [1] to [9].
[11] A laminate comprising an adherend layer consisting of at least one material selected from the group consisting of a wood-based material, a cellulosic material, a plastic material, a ceramic material and a metallic material and the cured product according to [10];
[12] A process for producing an aqueous emulsion comprising a step of melt-kneading the following (A), (B) and (C):

(A) an olefin copolymer comprising a structural unit derived from ethylene and/or linear α-olefin and a structural unit derived from a vinyl compound represented by the formula (I):

$$CH_2=CH\text{-}R \qquad (I)$$

wherein R represents a secondary alkyl group, a tertiary alkyl group or a alicyclic hydrocarbon group,
or
a polymer obtained by graft polymerizing an α,β-unsaturated carboxylic acid anhydride to the olefin copolymer,
(B) an acrylic resin comprising a structural unit derived from an α,β-unsaturated carboxylic acid and a structural unit derived from an α,β-unsaturated carboxylic acid ester,
(C) water.

[13] A process for producing a laminate comprising a first step of coating the aqueous emulsion according to any of [1] to [9] onto an adherend layer consisting of at least one material selected from the group consisting of a wood-based material, a cellulosic material, a plastic material, ceramic material and a metallic material to obtain a coated product having the adherend layer and a layer comprising the aqueous emulsion, and a second step of drying the coated product to obtain a laminate comprising the adherend layer and a cured product layer obtained from the aqueous emulsion.

Embodiments for Carrying Out the invention

(A) used for the present invention is an olefin copolymer comprising a structural unit derived from ethylene and/or a linear α-olefin and a structural unit derived from a vinyl compound represented by the formula (I):

$$CH_2=CH\text{-}R \qquad (I)$$

wherein R represents a secondary alkyl group, a tertiary alkyl group or a alicyclic hydrocarbon group (hereinafter, may be described as the vinyl compound (I)), which may be described,
hereinafter, as "Polymer (A-a)",
or
a polymer obtained by graft polymerizing an α,β-unsaturated carboxylic acid anhydride to Polymer (A-a), which may be described, hereinafter, as "polymer (A-b)". Hereinafter, Polymer (A-a) and Polymer (A-b) may be collectively described as "polymer (A)".

R in the above-mentioned vinyl compound (I) is a secondary alkyl group, a tertiary alkyl group or an alicyclic hydrocarbon group. As the secondary alkyl group, a secondary alkyl group having 3 to 20 carbon atoms is preferable, as the tertiary alkyl group, a tertiary alkyl group having 4 to 20 carbon atom is preferable, and as the alicyclic hydrocarbon group, an alicyclic hydrocarbon group having a three- to sixteen-membered ring is preferable. As the substituent R, an aliphatic hydrocarbon group having 3 to 20 carbon atoms and a three- to ten-membered ring and a tertiary alkyl group having 4 to 20 carbon atoms are more preferable.
As the specific examples of the vinyl compound (I), examples of the vinyl compound (I) wherein substituent R is a secondary alkyl group include 3-methyl-1-butene, 3-methyl-1-pentene, 3-methyl-1-hexene, 3-methyl-1-heptene, 3-methyl-1-octene, 3,4-dimethyl-1-pentene, 3,4-dimethyl-1-hexene, 3,4-dimethyl-1-heptene, 3,4-dimethyl-1-octene, 3,5-dimethyl-1-hexene, 3,5-dimethyl-1-heptene, 3,5-dimethyl-1-octene, 3,6-dimethyl-1-heptene, 3,6-dimethyl-1-actene, 3,7-dimethyl-1-octene, 3,4,4-trimethyl-1-pentene, 3,4,4-trimethyl-1-hexene, 3,4,4-trimethyl-1-heptene and 3,4,4-trimethyl-1-octene.

Examples of the vinyl compound (I) wherein substituent R is a tertiary alkyl group include 3,3-dimethyl-1-butene, 3,3-dimethyl-1-pentene, 3,3-dimethyl-1-hexene, 3,3-dimethyl-1-heptene, 3,3-dimethyl-1-octene, 3,3,4-trimethyl-1-pentene, 3,3,4-trimethyl-1-hexene, 3,3,4-trimethyl-1-heptene and 3,3,4-trimethyl-1-octene.

Examples of the vinyl compound (I) wherein substituent R is an alicyclic hydrocarbon group include vinylcyclopropane, vinylcyclobutene, vinylcyclopentane, vinylcyclohexane, vinylcycloheptane, vinylcyclooctane, 5-vinyl-2-norbornene, 1-vinyladamantane and 4-vinyl-1-cyclohexene.

Preferable examples of the vinyl compound (I) include 3-methyl-1-butene, 3-methyl-1-pentene, 3-methyl-1-hexene, 3,4-dimethyl-1-pentene, 3,5-dimethyl-1-hexene, 3,4,4-trimethyl-1-pentene, 3,3-dimethyl-1-butene, 3,3-dimethyl-1-pentene, 3,3,4-trimethyl-1-pentene, vinylcyclopentane, vinylcyclohexane, vinylcycloheptane, vinylcyclooctane and 5-vinyl-2-norbornene. More preferable examples of the vinyl compound (I) include 3-methyl-1-butene, 3-methyl-1-pentene, 3,4-dimethyl-1-pentene, 3,3-dimethyl-1-butene, 3,3,4-trimethyl-1-pentene, vinylcyclohexane and vinylnorbornene. Still more preferable examples of the vinyl compound (I) include 3, 3-dimethyl-1-butene and vinylcyclohexane. Most preferable examples of the vinyl compound (I) include vinylcyclohexane.

The content of the structural unit derived from the vinyl compound (I) in Polymer (A-a) is usually 5 to 40% by mole relative to 100% by mole of the structural units derived from all monomers of which Polymer (A-a) is composed, preferably 10 to 30% by mole and especially preferably 10 to 20% by mole.

It is preferred that the content of the structural unit derived from the monomer of the vinyl compound (I) is 40% by mole or less because the adhesiveness of the adhesive agent obtained tends to be improved.

The content of the structural unit derived from the monomer of the vinyl compound (I) can be measured by using $^1$H-NMR spectrum or $^{13}$C-NMR spectrum.

Usually, examples of the linear $\alpha$-olefin used in the present invention include linear $\alpha$-olefins having 3 to 20 carbon atoms including propylene. Specific examples thereof include linear olefins such as propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nanodecene and 1-eicosene. Among them, preferred are propylene, 1-butene, 1-pentene, 1-hexene and 1-octene, and more preferred is propylene.

The sum content of the structural unit derived from ethylene and the structural unit derived from the linear $\alpha$-olefin in Polymer (A-a) is usually 95 to 60% by mole relative to 100% by mole of the structural units derived from all monomers of which Polymer (A-a) is composed, preferably 90 to 70% by mole and more preferably 90 to 80% by mole.

As ethylene and/or a linear $\alpha$-olefin, ethylene and propylene are preferable.

Polymer (A-a) may be further copolymerized with addition-polymerizable monomers.

Herein, "addition-polymerizable monomers" means monomers excluding ethylene, a linear $\alpha$-olefin and the vinyl compound (I), and being addition-polymerizable monomers with ethylene, a linear $\alpha$-olefin and the vinyl compound (I), and the carbon number of such monomers is usually about 3 to 20.

Specific examples of the addition-polymerizable monomer include cycloolefins, vinylidene compounds represented by the following formula (II):

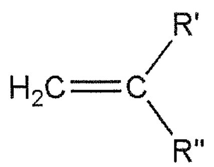

( II )

wherein, R' and R" independently represent a linear, branched or cyclic alky group having about 1 to 18 carbon atoms, a halogen atom or the like, diene compounds, vinyl halides, vinyl alkylacids, vinyl ethers, acrylonitriles, $\alpha,\beta$-unsaturated carboxylic acids described below, $\alpha,\beta$-unsaturated carboxylic acid esters described below and $\alpha,\beta$-unsaturated carboxylic acid anhydrides described below.

Examples of the cycloolefin include cyclobutene, cyclopentene, cyclohexene, cyclooctene, 3-methylcyclopentene, 4-methylcyclopentene, 3-methylcyclohexene, 2-norbornene, 5-methyl-2-norbornene, 5-ethyl-2-norbornene, 5-butyl-2-norbornene, 5-phenyl-2-norbornene, 5-benzyl-2-norbornene, 2-tetracyclododecene, 2-tricyclodecene, 2-tricycloundecene, 2-pentacyclopentadecene, 2-pentacyclohexadecene, 8-methyl-2-tetracyclododecene, 8-ethyl-2-tetracyclododecene, 5-acetyl-2-norbornene, 5-acetyloxy-2-norbornene, 5-methoxycarbonyl-2-norbornene, 5-ethoxycarbonyl-2-norbornene, 5-methyl-5-methoxycarbonyl-2-norbornene, 5-cyano-2-norbornene, 8-methoxycarbonyl-2-tetracyclododecene, 8-methyl-8-methoxycarbonyl-2-tetracyclododecene and 8-cyano-2-tetracyclododecene.

More preferable cycloolefins are cyclopentene, cyclohexene, cyclooctene, 2-norbornene, 5-methyl-2-norbornene, 5-phenyl-2-norbornene, 2-tetracyclododecene, 2-tricyclodecene, 2-tricycloundecene, 2-pentacyclopentadecene, 2-pentacyclohexadecene, 5-acetyl-2-norbornene, 5-acetyloxy-2-norbornene, 5-methoxycarbonyl-2-norbornene, 5-methyl-5-methoxycarbonyl-2-norbornene and 5-cyano-2-norbornene, and preferred are 2-norbornene and 2-tetracyclododecene.

Examples of the vinylidene compounds include isobutene, 2-methyl-1-butene, 2-methyl-1-pentene, 2-methyl-1-hexene, 2-methyl-1-heptene, 2-methyl-1-octene, 2,3-dimethyl-1-butene, 2,3-dimethyl-1-pentene, 2,3-dimethyl-1-hexene, 2,3-dimethyl-1-heptene, 2,3-dimethyl-1-octene, 2,4-dimethyl-1-pentene, 2,4,4-trimethyl-1-pentene and vinylidene chloride, and preferable vinylidene compounds are isobutene, 2,3-dimethyl-1-butene and 2,4,4-trimethyl-1-pentene.

Examples of the diene compounds include 1,3-butadiene, 1,4-pentadiene, 1,5-hexadiene, 1,6-heptadiene, 1,7-octadiene, 1,5-cyclooctadiene, 2,5-norbornadiene, dicyclopentadiene, 5-vinyl-2-norbornene, 5-allyl-2-norbornene, 4-vinyl-1-cyclohexene and 5-ethylidene-2-norbornene. Preferable diene compounds are 1,4-pentadiene, 1,5-hexadiene, 2,5-norbornadiene, dicyclopentadiene, 5-vinyl-2-norbornene, 4-viynl-1-cyclohexene and 5-ethylidene-2-norbornene.

Examples of the vinyl alkylacids include vinyl acetate, vinyl propionate and vinyl butyrate. Examples of vinyl ethers include methyl vinyl ether, ethyl vinyl ether and n-butyl vinyl ether.

Examples of the vinyl halides include vinyl chloride, and examples of the acrylonitriles include acrylonitrile and methacrylonitrile.

The content of the structural unit derived from the addition-polymerizable monomer used for Polymer (A-a) is usually in a range where the adhesiveness of the aqueous emulsion obtained is not diminished, and specific content thereof is usually about 5% by mole or less relative to 100% by mole of the structural units derived from all monomers of which Polymer (A-a) is composed, and is preferably the content where the structural units derived from all monomers of which Polymer (A-a) is composed is essentially not contained therein, and is specifically 1% by mole or less.

Examples of the process for producing Polymer (A-a) include a process for producing it in the presence of a catalyst obtained by using a transition metal compound having an indenyl-type anion skeleton or a bridged cyclopentadiene-type anion skeleton. Among them, processes for producing it according to the methods described in JP 2003-82028 A, JP 2003-160621 A and JP 2000-128932 A are preferable.

In the production of Polymer (A-a), a honopolymer of ethylene and a homopolymer of the vinyl compound (I) (e.g. cyclohexane, etc.) are produced as by-products other than the copolymer of the present invention depending on kinds of the catalyst used or polymerization conditions is some cases, and in such cases, the copolymer of the present invention can be easily isolated by conducting a solvent-extraction using Soxhlet extractor or the like. As the solvent used in the extraction, for example, a homopolymer of cyclohexene can be removed as an insoluble component of the extraction using toluene, a polyolefin such as polyethylene can be removed as an insoluble component of the extraction using chloroform, and Polymer (A-a) can be isolated as a soluble component in the both solvents. If there is no problem, of course, Polymer (A-a) wherein such by-products co-exist therein may be used.

A molecular weight distribution of Polymer (A-a) (Mw/Mn=[weight-average molecular weight]/[number-average molecular weight]) is usually about 1. 5 to about 10.0, preferably about 1.5 to about 7.0 and more preferably about 1.5 to about 5.0. It is preferred that the molecular weight distribution of Polymer (A-a) is 1.5 or more and 10.0 or less because the mechanical strength and transparency of Polymer (A-a) obtained tend to be improved.

Additionally, the weight-average molecular weight (Mw) of Polymer (A-a) is usually about 5, 000 to about 1, 000, 000, and from the viewpoint of its mechanical strength, it is preferably about 10, 000 to about 500, 000 and more preferably about 15, 000 to about 400,000. It is preferred that the weight-average molecular weight of Polymer (A-a) is 5,000 or more because the mechanical strength of Polymer (A-a) obtained tends to be improved, and it is preferred that the weight-average molecular weight of Polymer (A-a) is 1,000,000 or less because the flowability of Polymer (A-a) obtained tends to be improved.

The molecular weight distribution of Polymer (A-a) can be calculated with gel permeation chromatograph (GPC) according to the method specifically described in the following Examples.

An intrinsic viscosity [η] of Polymer (A-a) is usually about 0.25 dl/g to about 10 dl/g, and preferably about 0.3 dl/g to about 3 dl/g from the viewpoint of its mechanical strength.

When the value of the melt flow rate (MFR) of Polymer (A-a) is measured with a melt indexer (L217-E14011, manufactured by Techno Seven Co. Ltd.) under the condition of 190°C and 2.16 kgf according to JIS K7210, it is usually 10 to 300, and especially, from the viewpoint of film formability, it is preferably 20 to 300, more preferably 20 to 250, much more preferably 30 to 230, still much more preferably 50 to 210 and most preferably 60 to 200.

Meanwhile, MFR of Polymer (A-a) can be adjusted by changing the amount to be used of a molecular weight modifier such as hydrogen, the polymerization temperature or the like in the copolymerization of ethylene and/or the linear α-olefin with the vinyl compound (I).

Polymer (A-b) is a polymer obtained by graft polymerizing an α,β-unsaturated carboxylic acid anhydride to the Polymer (A-a) thus obtained.

The graft polymerization amount of the α,β-unsaturated carboxylic acid anhydride relative to 100 parts by weight of Polymer (A-b) is usually about 0.01% to about 20% by weight relative to 100% by weight of Polymer (A-b)

obtained, preferably about 0.05% to about 10% by weight and more preferably about 0. 1% to about 5% by weight.

It is preferred that the graft polymerization amount of the α,β-unsaturated carboxylic acid anhydride is 0.01% by weight or more because the adhesiveness of Polymer (A-b) tends to be improved, and it is preferred that the graft polymerization amount of the α,β-unsaturated carboxylic acid anhydride is 20% by weight or less because the heat stability of Polymer (A-b) tends to be improved.

Examples of the α,β-unsaturated carboxylic acid anhydride include maleic anhydride, itaconic anhydride, citraconic anhydride, nadic anhydride, nadic methyl anhydride and himic anhydride. The above-mentioned α,β-unsaturated carboxylic acid anhydrides may be used in combination.

As the α,β-unsaturated carboxylic acid anhydride, maleic anhydride is preferable.

Examples of the process for producing Polymer (A-b) include a process comprising melting Polymer (A-a) followed by adding the a, α,β-unsaturated carboxylic acid anhydride thereto to conduct a graft polymerization, and a process comprising dissolving Polymer (A-a) in a solvent such as toluene and xylene followed by adding the α,β-unsaturated carboxylic acid anhydride thereto to conduct a graft polymerization.

Process comprising melting Polymer (A-a) followed by adding the α,β-unsaturated carboxylic acid anhydride thereto to conduct a graft polymerization is preferable because well-known various processes for mixing the resins with another or mixing the resin with a solid or liquid additives can be adopted when the melting and kneading is conducted by using an extruding machine. More preferable examples thereof include a process comprising separately mixing all of the components or some of the components in combination with Henschel mixer, ribbon blender and blender to obtain a uniform mixture and then melting and kneading the mixture. As the melting and kneading means, well-known melting and kneading means such as Bamberry mixer, Plastomill, Brabender Plastograph and monoaxially or biaxially extruder can be widely adopted. Preferred is a process comprising feeding the olefinic copolymer, the unsaturated carboxylic acid and a radical initiator which are previously pre-mixed enough from the feed opening of the extruder using a monoaxially or biaxially extruder to conduct kneading. The temperature of the section of the extruder in which melting and kneading are conducted, for example, the cylinder temperature of the extruder, is usually 50˚C to 300˚C, preferably 80˚C to 270˚C. It is preferred that the temperature is 50˚C or more because the graft amount tends to be improved, and it is preferred that the temperature is 300˚C or less because the decomposition of Polymer (A-a) tends to be inhibited. It is preferred that the temperature of the section of the extruder where melt-kneading is conducted is divided to two stages, namely, the first half stage and the latter half stage, and that the temperature of the latter half stage is set higher than that of the first half stage. The melt-kneading time is usually 0.1 minute to 30 minutes and preferably 0.1 minute to 5 minutes. It is preferred that the melt-kneading time is 0.1 minute or more because the graft amount tends to be improved, and it is preferred that the melting and kneading time is 30 minutes or less because the decomposition of Polymer (A-a) tends to be inhibited.

For graft polymerizing the α,β-unsaturated carboxylic acid anhydride to Polymer (A-a), the polymerization is usually conducted in the presence of a radical initiator.

The additive amount of the radical initiator is usually 0.01 parts by weight to 10 parts by weight relative to 100 parts of Polymer (A-a) and preferably 0.01 parts by weight to 1 part by weight. It is preferred that the additive amount is 0.01 part by weight or more because the graft amount to Polymer (A-a) is increased and the adhesive strength tends to be improved. It is preferred that the additive amount is 10 parts by weight or less because the unreacted radical initiator in the modified product obtained is decreased and the adhesive strength tends to be improved.

The radical initiator is usually an organic peroxide, and is preferably an organic peroxide having a decomposition temperature of 50˚C to 210˚C at which the half life of the organic peroxide is 1 minute. It is preferred that the temperature of decomposition is 50˚C or more because the graft amount tends to increase, and it is preferred that the temperature of decomposition is 210˚C or less because the decomposition of Polymer (A-a) tends to be inhibited. It is preferable that these organic peroxides have activities of extracting a proton from Polymer (A) after decomposing themselves to generate a radical.

Examples of the organic peroxide of which the temperature of decomposition wherein the half period becomes 1 minute is 50˚C to 210˚C include diacylperoxide compounds, dialkylperoxide compounds, peroxyketal compounds, alkyl perester compounds and percarbonate compounds. Specific examples thereof include dicetyl peroxydicarbonate, di-3-methoxybutyl peroxydicarbonate, di-2-ethylhexyl peroxydicarbonate, bis(4-t-butyl cyclohexyl) peroxydicarbonate, diisopropyl peroxydicarbonate, t-butyl peroxyisopropylcarbonate, dimyristyl peroxycarbonate, 1,1,3,3-tetramethyl butyl neodecanoate, α-cumyl peroxy neodecanoate, t-butyl peroxy neodecanoate, 1,1bis(t-butylperoxy)cyclohexane, 2,2bis (4,4-di-t-butylperoxycyclohexyl)propane, 1,1-bis(t-butylperoxy)cyclododecane, t-hexylperoxyisopropylmonocarbonate, t-butylperoxy-3,5,5-trimethylhexanoate, t-butylperoxylaurate, 2,5dimethyl-2, 5-di (benzoylperoxy) hexane, t-butylperoxyacetate, 2,2-bis(t-butylperoxy)butene, t-butylperoxybenzoate, n-butyl-4,4-bis(t-beloxy)valerate, di-t-butylbeloxyisophthalate, dicumylperoxide, α,-α'-bis(t-butylperoxy-m-isopropyl)benzene, 2,5-dimethyl-2,5-di(t-butylperoxy)hexane, 1,3-bis(t-butylperoxyisopropyl)benzene, t-butylcumylperoxide, di-t-butylperoxide, p-menthanehydroperoxide and 2,5-dimethyl-2,5-di(t-butylperoxy)hexyne-3. When the temperature of decomposition is 50˚C to 210˚C, the graft amount increases, and therefore, such temperature is preferable.

Among these organic peroxides, preferred are dialkylperoxide compounds, diacylperoxide compounds, percarbonate compounds and alkylperester compounds. The additive amount of the organic peroxide is usually 0.01 part by weight to 20 parts by weight relative to 100 parts by weight of Polymer (A-a) and preferably 0.05 part by weight to 10 parts by weight.

The structural unit derived from the α,β-unsaturated carboxylic acid anhydride included in Polymer (A-b) thus obtained may be one wherein the acid anhydride group is closed, and may be one wherein the acid anhydride group is opened, and both of one wherein the acid anhydride group is closed and one wherein the acid anhydride group may be included therein.

The molecular weight distribution of Polymer (A-b) (Mw/Mn) is usually 1.5 to 10, preferably 1.5 to 7 and more preferably 1.5 to 5. It is preferred that the molecular weight distribution is 10 or less because the adhesiveness of Polymer (A-b) tends to be improved.

The molecular weight distribution of Polymer (A-b) can be measured in the same as those of the above-mentioned molecular weight distribution of the olefin-based copolymer.

An intrinsic viscosity [η] of Polymer (A-b) is usually about 0.25 dl/g to 10 dl/g, and preferably about 0.3 dl/g to 3 dl/g from the viewpoint of its mechanical strength.

When the value of the melt flow rate (MFR) of Polymer (A-b) is measured in accordance with JIS K7210 with a melt indexer (L217-E14011, manufactured by Techno Seven Co. Ltd.) under the condition of 190˚C and 2.16 kgf, it is usually 10 to 300, preferably 20 to 300 from the viewpoint of dispersibility, and more preferably 20 to 250, and more preferably 30 to 250. MFR of Polymer (A-a) can be controlled by the conditions such as reaction temperature, kinds of the radical initiator and the amount of the radical initiator on conducting the formation of a cross-linkage in the presence of a radical initiator or conducting a graft polymerization together with an α,β-unsaturated carboxylic acid anhydride and a radical initiator. Generally, when Polymer (A-b) is an ethylene-based polymer, MFR tends to become smaller if the amount of the radical initiator increases, and when Polymer (A-b) is a polypropylene-based polymer, MFR tends to become smaller if the amount of the radical initiator decreases, and MFR can be controlled by controlling the kinds of the radical initiator and the temperature condition.

(B) is an acrylic resin comprising a structural unit derived from an α,β-unsaturated carboxylic acid and a structural unit derived from an α,β-unsaturated carboxylic acid ester, and, hereinafter, it may be refer to as Emulsifier (B).

Examples of the α,β-unsaturated carboxylic acid, herein, include acrylic acid, methacrylic acid, crotonic acid, isocrotonic acid, maleic acid, fumaric acid, itaconic acid, citraconic acid, nadic acid, methylnadic acid, himic acid, angelic acid, tetrahydrophthalic acid, sorbic acid and mesaconic acid.

As the α,β-unsaturated carboxylic acid, plural kinds of the α,β-unsaturated carboxylic acid may be used.

As the α,β-unsaturated carboxylic acid, acrylic acid and methacrylic acid are especially preferable.

The a, α,β-unsaturated carboxylic acid ester is an ester form of an α,β-unsaturated carboxylic acid, and examples thereof include an α,β-unsaturated carboxylic acid ester obtained from an aliphatic alcohol having 1 to 20 carbon atoms and an α,β-unsaturated carboxylic acid, an α,β-unsaturated carboxylic acid ester obtained from an aliphatic alcohol having an amino group and having 1 to 10 carbon atoms and an α,β-unsaturated carboxylic acid, an α,β-unsaturated carboxylic acid ester obtained from an aliphatic alcohol having a hydroxyl group and having 1 to 10 carbon atoms and an α,β-unsaturated carboxylic acid, and an α,β-unsaturated carboxylic acid ester obtained from an aliphatic alcohol having a carboxylic acid group and having 1 to 10 carbon atoms and an α,β-unsaturated carboxylic acid.

Examples of the α,β-unsaturated carboxylic acid of which the α,β-unsaturated carboxylic acid ester is composed, herein, include the same as those of the above-mentioned α,β-unsaturated carboxylic acid, and acrylic acid and methacrylic acid are especially preferable.

Examples of the aliphatic alcohol having 1 to 20 carbon atoms include methyl alcohol, ethyl alcohol, isopropyl alcohol, n-propyl alcohol, n-butyl alcohol, t-butyl alcohol, amyl alcohol, 2-ethylhexyl alcohol, nonyl alcohol, decanyl alcohol, lauryl alcohol, cetyl alcohol, stearyl alcohol, and cyclohexyl alcohol.

Examples of the α,β-unsaturated carboxylic acid ester obtained from an aliphatic alcohol having 1 to 20 carbon atoms and an α,β-unsaturated carboxylic acid include methyl acrylate, ethyl acrylate, propyl acrylate, butyl acrylate, amyl acrylate, ethylhexyl acrylate, nonyl acrylate, decanyl acrylate, lauryl acrylate, cetyl acrylate, stearyl acrylate, cyclohexyl acrylate, methyl methacrylate, ethyl methacrylate, propyl methacrylate, butyl methacrylate, amyl methacrylate, ethylhexyl methacrylate, nonyl methacrylate, decanyl methacrylate, lauryl methacrylate, cetyl methacrylate, stearyl methacrylate and cyclohexyl methacrylate. Two or more kinds of the α,β-unsaturated carboxylic acid ester obtained from the aliphatic alcohols having 1 to 20 carbon atoms and the α,β-unsaturated carboxylic acid may be used in combination.

The aliphatic alcohol having an amino group and having 1 to 10 carbon atoms means a group wherein a hydrogen atom of the above-mentioned aliphatic alcohol is replaced by an amino group ($-NH_2$), an alkylamino group ($-NHR^2$ wherein $R^2$ represents an alkyl group having 1 to 10) or a dialkylamino group ($-NR^3R^4$ wherein $R^3$ and $R^4$ each represents an aliphatic alcohol having 1 to 10 and $R^3$ and $R^4$ may be the same or different from each other) Specific examples thereof include aminoalkyl alcohol such as aminomethyl alcohol, aminoethyl alcohol and aminopropyl alcohol; an alkylaminoalkyl alcohol such as 2-(N-methylamino)ethyl alcohol, 2-(N-ethylamino)ethyl alcohol, 2-(N-isopropylamino)ethyl alcohol, 3-methylaminopropyl alcohol, 2-(N-n-propylamino)ethyl alcohol, 2-(N-n-butylamino)ethyl alcohol, 2-(N-isobutylamino)ethyl alcohol, 2-(N-sec-butylamino)ethyl alcohol and 2-(N-t-butylamino)ethyl alcohol; and a dialkylaminoalkyl alcohol such as 2-(N,N-dimethylamino)ethyl alcohol, 2-(N-methyl-N-ethylamino)ethyl alcohol, 2-(N,N-diethylamino)ethyl alcohol, 3-(N,N-dimethylamino)propyl alcohol and 3-(N,N-diethylamino)propyl alcohol.

Examples of the α,β-unsaturated carboxylic acid ester obtained from an aliphatic alcohol having an amino group and having 1 to 10 carbon atoms and an α,β-unsaturated carboxylic acid include N,N-diethylaminoethyl acrylate, N,N-diethylaminoethyl methacrylate, N,N-dimethylaminoethyl acrylate, N,N-dimethylaminoethyl methacrylate, N-methyl-N-ethylaminoethyl acrylate and N-methyl-N-ethylaminoethyl methacrylate, and N,N-dimethylaminoethyl methacrylate is preferable. Two or more kinds of the α,β-unsaturated carboxylic acid ester obtained from the aliphatic alcohols having an amino group and having 1 to 10 carbon atoms and the α,β-unsaturated carboxylic acid may be used in combination.

The aliphatic alcohol having a hydroxyl group and having 1 to 10 carbon atoms means a group wherein a hydrogen atom of the above-mentioned aliphatic alcohol is replaced by a hydroxyl group. Specific examples thereof include hydroxymethyl alcohol, hydroxyethyl alcohol, hydroxypropyl alcohol, hydroxybutyl alcohol, hydroxypentyl alcohol and hydroxyhexyl alcohol.

Examples of the α,β-unsaturated carboxylic acid ester obtained from an aliphatic alcohol having a hydroxyl group and having 1 to 10 carbon atoms and an α,β-unsaturated carboxylic acid include hydroxymethyl acrylate, hydroxyethyl acrylate, hydroxypropyl acrylate, hydroxybutyl acrylate, hydroxypentyl acrylate, hydroxyhexyl acrylate, hydroxymethyl methacrylate, hydroxyethyl methacrylate, hydroxypropyl methacrylate, hydroxybutyl methacrylate, hydroxypentyl methacrylate and hydroxyhexyl methacrylate. Two or more kinds of the α,β-unsaturated carboxylic acid ester obtained from the aliphatic alcohols having a hydroxyl group and having 1 to 10 carbon atoms and the α,β-unsaturated carboxylic acid may be used in combination.

The aliphatic alcohol having a carboxylic acid group and having 1 to 10 carbon atoms means an alcohol wherein a hydrogen atom of the above-mentioned aliphatic alcohol is replaced by a carboxylic acid group. The carboxylic acid group, herein, represents an organic group having a carboxyl group, and examples thereof include a carboxymethyl group, a 1,2-dicarboxyethyl group, a 2-carboxyphenyl group and a 2,3-dicarboxyphenyl group.

Examples of the α,β-unsaturated carboxylic acid ester obtained from an aliphatic alcohol having a carboxylic acid group and having 1 to 10 carbon atoms and an α,β-unsaturated carboxylic acid include 2-acryloyloxyethyl succinic acid, 2-acryloyloxyethyl phthalic acid, 2-methacryloyloxyethyl succinic acid and 2-methacryloyloxyethyl phthalic acid. Two or more kinds of the α,β-unsaturated carboxylic acid ester obtained from the aliphatic alcohols having a carboxylic acid group and having 1 to 10 carbon atoms and the α,β-unsaturated carboxylic acid may be used in combination.

The content of the structural unit derived from the α,β-unsaturated carboxylic acid in Emulsifier (B) is usually 5% by mole to 95% by mole relative to 100% by mole of all structural units of which Emulsifier (B) is composed and preferably 5% by mole to 80% by mole.

The content of the structural unit derived from the α,β-unsaturated carboxylic acid ester in Emulsifier (B) is usually 5% by mole to 95% by mole relative to 100% by mole of all structural units of which Emulsifier (B) is composed and preferably 10% by mole to 80% by mole.

Emulsifier (B) may contain a structural unit derived from ethylene, a linear α-olefin, the vinyl compound (I) and the above-mentioned addition-polymerizable monomers other than the structural units derived from the α,β-unsaturated carboxylic acid and derived from the α,β-unsaturated carboxylic acid ester, and the content thereof is usually in a range where the adhesiveness of the aqueous emulsion obtained is not diminished, and specific total content thereof is about 5% by mole or less relative to 100% by mole of the structural units derived from all monomers of which Emulsifier (B) is composed, and preferably 1% by mole or less and more preferably a content such that the structural unit derived from the addition-polymerizable monomer is not essentially contained.

As the structural unit derived from the α,β-unsaturated carboxylic acid ester in Emulsifier (B), different plural kinds of the structural unit derived from the α,β-unsaturated carboxylic acid ester may be used.

Among the structural units derived from the α,β-unsaturated carboxylic acid ester, the content of the structural unit derived from the α,β-unsaturated carboxylic acid ester obtained from an aliphatic alcohol having 1 to 20 carbon atoms and an α,β-unsaturated carboxylic acid is usually 5% by mole to 95% by mole relative to 100% by mole of all structural units of which Emulsifier (B) is composed and preferably 10% by mole to 80% by mole.

Among the structural units derived from the α,β-unsat.urated carboxylic acid ester, the content of the structural unit derived from the α,β-unsaturated carboxylic acid ester obtained from an aliphatic alcohol having an amino group and having 1 to 10 carbon atoms and an α,β-unsaturated carboxylic acid is usually 1% by mole to 80% by mole relative to 100% by mole of all structural units of which Emulsifier (B) is composed and preferably 1% by mole to 50% by mole.

Among the structural units derived from the α,β-unsaturated carboxylic acid ester, the content of the structural unit derived from the α,β-unsaturated carboxylic acid ester obtained from an aliphatic alcohol having a carboxylic acid group and having 1 to 10 carbon atoms and an α,β-unsaturated carboxylic acid is usually 0.1% by mole to 80% by mole relative to 100% by mole of all structural units of which Emulsifier (B) is composed and preferably 5% by mole to 40%

by mole.

Among the structural units derived from the α,β-unsaturated carboxylic acid ester, the content of the structural unit derived from the α,β-unsaturated carboxylic acid ester obtained from an aliphatic alcohol having a hydroxyl group and having 1 to 10 carbon atoms and an α,β-unsaturated carboxylic acid may be contained and the content thereof is usually 0% by mole to 50% by mole relative to 100% by mole of all structural units of which Emulsifier (B) is composed and preferably 0% by mole to 30% by mole and more preferably 1% by mole or less and it is still more preferred that it is not essentially contained.

Emulsifier (B) preferably contains the structural unit derived from the α,β-unsaturated carboxylic acid of which content is 5% by mole to 80% by mole, the structural unit derived from the α,β-unsaturated carboxylic acid ester obtained from an aliphatic alcohol having 1 to 20 carbon atoms and an α,β-unsaturated carboxylic acid of which content is 10% by mole to 80% by mole, the structural unit derived from the α,β-unsaturated carboxylic acid ester obtained from an aliphatic alcohol having an amino group and having 1 to 10 carbon atoms and an α,β-unsaturated carboxylic acid of which content is 1% by mole to 50% by mole, and the structural unit derived from the α,β-unsaturated carboxylic acid ester obtained from an aliphatic alcohol having a carboxylic acid group and having 1 to 20 carbon atoms and an α,β-unsaturated carboxylic acid of which content is 5% by mole to 30% by mole, with the proviso that the total content of the above-mentioned structural units is 100% by mole.

Examples of the process for producing Emulsifier (B) include a process for producing it comprising addition polymerizing a mixture of the monomers (monomer having a structural unit derived from the α,β-unsaturated carboxylic acid or the α,β-unsaturated carboxylic acid ester). Specifically, an alcohol such as isopropyl alcohol or water is used as a solvent, a part or all of the monomers are mixed with the solvent, and the radical initiator and the other monomers are mixed therewith, usually at 0˚C to 50˚C, preferably at 0˚C to 30˚C, and the stirring is conducted for about 1 hour to 24 hours. In order to control the reaction, the radical initiator may be added after dissolving it in an organic solvent.

Examples of the polymerization initiator, herein, include azo-typed compounds such as 2,2'-azobisisobutyronitrile, 2,2'-azobis(2-methylbutyronitrile), 1,1'-azobis(cyclohexane-1-carbonitrile), 2,2'-azobis(2,4-dimethylvaleronitrile), 2,2'-azobis(2,4-dimethyl-4-methoxyvaleronitrile), dimethyl-2,2'-azobis(2-methylpropionate) and 2,2'-azobis(2-hydroxymethylpropionitrile); organic peroxides such as lauryl peroxide, tert-butyl hydroperoxide, benzoyl peroxide, tert-butyl peroxybenzoate, cumene hydroperoxide, diisopropyl peroxydicarbonate, di-n-propyl peroxydicarbonate, tert-butyl peroxyneodecanoate, tert-butyl peroxypivalate and (3,5,5-trimethylhexanoyl) peroxide; inorganic peroxides such as potassium persulfate, ammonium persulfate and hydrogen peroxide. Redox-typed initiators in which heat polymerization initiator and a reducing agent are used in combination can be used as the polymerization initiator.

The aqueous emulsion of the present invention comprises the above-mentioned (A), (B) and (C). Examples of the process for producing the aqueous emulsion include a process comprising melt-kneading (A), (B) and (C) which is water; a process comprising a heating step of heating (A) and a mixing step of mixing (B) with the heated (A) obtained in the heating step; a process comprising a step of heating and kneading (A) and (B) and a step of dispersing the kneading product obtained in the above-mentioned step in (C); a process comprising a dissolving step of dissolving (A) in an organic solvent such as toluene, a mixing step of mixing the dissolved material obtained in the above-mentioned dissolving step with (B) and a removing step of removing the above-mentioned organic solvent from the mixture obtained in the above-mentioned mixing step.

Additionally, examples thereof include a process for producing an emulsion by a chemical emulsifying method such as self-emulsification other than a mechanical emulsification method as described above.

A process comprising melt-kneading (A), (B) and (C) and a process comprising a heating step of heating (A) and a mixing step of mixing (B) with the heated (A) obtained in the heating step are preferable.

Examples of an apparatus used in the step of melt-kneading (A), (B), and if necessary, (C) include instruments having a barrel (cylinder) such as multi-screw extruders such as twin screw extruders, LABO PLASTOMILL (manufactured by Toyo Seiki Seisaku-sho Ltd.) and LABO PLASTOMILL μ (manufactured by Toyo Seiki Seisaku-sho Ltd.), a homogenizer and T.K. FILMIX (manufactured by PRIMIX Corporation), and instruments having no barrel (cylinder) such as a stirring vessel, a chemical stirrer, a vortex mixer, a flow jet mixer, a colloid mill, an ultrasonic wave generator, a high-pressure homogenizer, BUNSANKUN (trade mark registered by Fujikin Inc.), a static mixer and a micro mixer.

The shear rate of the instrument having a barrel is usually about 200 $sec^{-1}$ to about 100000 $sec^{-1}$, and preferably about 1000 $sec^{-1}$ to about 2500 $sec^{-1}$. When the shear rate is 200 $sec^{-1}$ or more, the adhesiveness of a resulting emulsion tends to increase and therefore, such rate is preferable, and when the shear rate is 100000 $sec^{-1}$ or less, industrial production tends to become easier, and therefore, such rate is preferable.

The shear rate, herein, is a value obtained by dividing the peripheral velocity [mm/sec] of the outermost peripheral part of a screw element by the clearance [mm] between a screw and a barrel.

Examples of the process comprising melt-kneading (A), (B) and (C) include a process for producing an aqueous emulsion continuously by extruding from a die by continuously feeding (A) through a hopper or a feeding port of the twin screw extruder, heating and melt-kneading, feeding (B) under pressure through at least one feeding port provided in a compression zone, a metering zone or a degassing zone of the extruder, kneading it with (A) with screw followed by

feeding (C) through at least one feeding port provided in a compression zone.

Examples of the process comprising a heating step of heating (A) and a mixing step of mixing (B) with the heated (A) obtained in the heating step include a process wherein heating a cylinder of a kneader, putting (A) into the cylinder, conducting a heating step of melting it while rolling, conducting a mixing step of putting (B) therein and rolling, and then, putting the mixture obtained into heated water and dispersing it to obtain an aqueous emulsion.

As the process comprising a heating step of heating (A) and a mixing step of mixing (B) with the heated (A) obtained in the heating step, a process using a multi-screw extruder is preferable.

A concrete method is described below. The process is, for example, a process for producing the aqueous emulsion of the present invention via a heating step wherein (A) is fed through a hopper of the multi-screw extruder having two or more screws in its casing, heated and melt-kneaded, and a mixing step wherein it is kneaded with (B) fed through at least one liquid feeding port provided in a compression zone and/or a metering zone of the extruder together with dispersing in (C).

As the aqueous emulsion of the present invention, one wherein a dispersoid containing (A) and (B) is dispersed in (C) which is a dispersion medium is preferable.

The volume-based median diameter of the dispersoid is usually 0.01 $\mu$m to 3 $\mu$m, preferably 0.5 $\mu$m to 2.5 $\mu$m, and more preferably 0.5 $\mu$m to 1.5 $\mu$m.

It is preferred that the volume-based median diameter thereof is 0.01 $\mu$m or more because of the easily production, and it is preferred that it is 3 $\mu$m or less because of tendency of improving in the adhesiveness.

The volume-based median diameter referred to herein is a particle diameter at which the value of an integrated particle diameter distribution on a volume standard is 50%.

In the emulsion of the present invention may be incorporated, for example, aqueous emulsions such as an aqueous polyurethane emulsion and an aqueous ethylene-vinyl acetate copolymer emulsion; thermosetting resins such as a urea resin, a melamine resin and a phenol resin; fillers such as clay, kaolin, talc and calcium carbonate; antiseptics; rust preventives; defoaming agents; foaming agents; thickeners such as polyacrylic acid, polyether, methyl cellulose, carboxymethylcellulose, polyvinyl alcohol and starch; viscosity modifiers; flame retarders; pigments such as titanium oxide; high boiling solvents such as dimethyl succinate and dimethyl adipate, which are dibasic acids; and plasticizers.

The aqueous emulsion of the present invention affords a cured product by applying it onto an adherend layer followed by drying. The cured product can be usually used for a coating material, a primer, a base sheet and an adhesive agent.

Examples of the adherends layer include wood-based materials such as wood, plywood, medium density fiberboard (MDF), particle board and fiber board; paper-based materials such as wallpaper and wrapping paper; cellulosic materials such as cotton clothes, hemp cloth and rayon; plastic materials, e.g. polyolefins such as polyethylene (polyolefin composed mainly of structural units derived from ethylene; the same shall apply hereinafter), polypropylene (polyolefin composed mainly of structural units derived from propylene; the same shall apply hereinafter) and polystyrene, polycarbonate, acrylonitrile/butadiene/styrene copolymer (ABS resin), (meth)acrylic resin polyester, polyether, polyvinyl chloride, polyurethane and forming polyurethane; ceramic materials such as glass and pottery; and metallic materials such as iron, stainless steel, copper and aluminum.

The adherend layer may be a composite material made of a plurality of materials. It may also be a kneaded shaped article made of an inorganic filler such as talc, silica and activated carbon, carbon fiber or the like, and a plastic material.

The polyurethane as used herein is a macromolecule crosslinked with urethane linkages and usually can be obtained through a reaction between an alcohol (-OH) and an isocyanate (-NCO). Foaming polyurethane is polyurethane which is to be foamed with carbon dioxide generated from a reaction between an isocyanate and water which is used as a crosslinking agent or a volatile solvent like Freon. Semirigid polyurethane is used for automotive interior applications and rigid polyurethane is used for coating materials.

Examples of a preferable adherend layer include at least one material selected from the group consisting of the wood-based material, the cellulosic material, the plastic material, the ceramic material and the metallic material, and among them, preferred are polypropylene, polystyrene, polycarbonate, acrylonitrile/butadiene/styrene copolymer (ABS resin), polyethylene terephthalate, polyvinyl chloride, (meth)acrylic resin, glass, aluminum and polyurethane, and more preferred are polypropylene, polyvinyl chloride, glass, aluminum, and polyurethane.

The cured product derived from the aqueous emulsion of the present invention has good adhesiveness to an adherend made of polyolefin, such as polypropylene, which has heretofore been considered as being adhesion-resisting.

When one of the adherends is a water absorbing material such as a wood-based material, a paper-based material and a cellulosic material, the aqueous emulsion of the present invention can be applied as it is to another adherend. That is, when an aqueous emulsion is applied onto a water-absorbing adherend and then another adherend (this may be either capable or incapable of absorbing water) is laminated onto the layer derived from the aqueous emulsion, the water contained in the aqueous emulsion is absorbed by the water-absorbing adherend, so that the layer derived from the aqueous emulsion becomes an adhesive layer and, as a result, a laminate having the water-absorbing

adherend/the adhesive layer/the other adherend can be obtained.

When both of the adherends are incapable of absorbing water, a laminate can be obtained by applying an aqueous emulsion of the present invention onto one side of one of the adherends, then drying it to form a cured product layer derived from the aqueous emulsion, attaching the other adherend, and heating them to adhere.

Onto the cured product of the present invention, a liquid material may be further applied as a coating material. As the coating material, the materials illustrated as the materials for the above-mentioned adherend layer such as polyurethane and being a liquid material is preferable because of good adhesiveness to the cured product.

The aqueous emulsion has good adhesiveness to polypropylene.

## Examples

The present invention will be illustrated in more detail by Examples bellow, but the present invention is not limited to these Examples. All parts and % in examples are by weight, unless otherwise stated.

Additionally, the solid contents in the emulsifier and the aqueous emulsion were measured by the measuring method in accordance with JIS K-6828.

(1) The molecular weights of olefin-based copolymers and Polymer (A) were determined under the conditions given below by gel permeation chromatograph (GPC) with calibration using standard polystyrenes (molecular weights of 688 to 400,000). The molecular weight distribution was evaluated by the ratio (Mw/Mn) of a weight average molecular weight (henceforth, Mw) to a number average molecular weight (henceforth, Mn).
Model: 150-C produced by Waters
Column: shodex packed column A-80M
Measurement temperature: 140°C
Measurement solvent: orthodichlorobenzene
Measurement concentration: 1 mg/ml

(2) The content of vinylcyclohexane units in an olefin copolymer was determined using the following $^{13}$C-NMR apparatus.
$^{13}$C-NMR apparatus: DRX600 produced by BRUKER
Measurement solvent: mixed solvent of orthodichlorobenzene and orthodichlorobenzene-d4 (volume ratio of 4:1)
Measurement temperature: 135°C Measurement method: Powergate Decouping method
Pulse angle: 45°
Measurement basis: tetramethylsilane

### Content of vinylcyclohexane units in an ethylene-vinylcyclohexane copolymer

The content of vinylcyclohexane units in an ethylene-vinylcyclohexane copolymer was calculated according to the following formula.

<Calculation formula>

Content of vinylcyclohexane units (mol%) $=100\times A/(B-2A)$

A: Integlation value of integration of signals at 45 ppm to 40 ppm
B: Integration value of integration of signals at 35 ppm to 25 ppm

### Content of vinylcyclohexane units in an propylene-vinylcyclohexane copolymer

The content of vinylcyclohexane units in an propylene-vinylcyclohexane copolymer was calculated according to the following formula.

<Calculation formula>

Content of vinylcyclohexane units (mol%) $=100\times A/(A+B+C)$

A: One sixth of integlation value of integration of signals at 28 ppm to 27 ppm

B: Integlation value of integration of signals at 22 ppm to 19.5 ppm
C: Integlation value of integration of signals at 18 ppm to 14 ppm

(3) Intrinsic viscosity ([η], unit: dl/g)

It was measured at 135˚C by using tetralin as a solvent and by using an Ubbelohde's viscometer.

(4) Glass-transition temperature (Tg) (unit: ˚C), melting point (Tm) (unit: ˚C)

A differential scanning calorimetry curve was measured under the conditions given below be using a differential scanning calorimeter (manufactured by Seiko Instruments Inc. SSC-5200) and glass-transition temperature and melting point were determined based on a differential scanning calorimetry curve at second heating.

<Measurement condition>

Heating (First): Heating from 20˚C to 200˚C at a rate of 10˚C/minute was conducted and then, maintaining at 200˚C for 10 minutes was conducted.
Cooling: After the first heating operation, cooling from 200˚C to -100˚C at a rate of 10˚C/minute was promptly conducted and then, maintaining at -100˚C for 10 minutes was conducted.
Heating (Second): After the cooling operation, heating from -100˚C to 200˚C at a rate of 10˚C/minute was promptly conducted.
The graft polymerization amount of maleic anhydride was determined by dissolving 1.0 g of sample in 20 ml of xylene, dropping the solution of the sample into 300 ml of methanol under stirring to reprecipitate and collect the sample, subsequently vacuum-drying the collected sample (at 80˚C for 8 hours), preparing a film of 100 μm in thickness by hot pressing, measuring the infrared absorption spectrum of the resulting film, and determining the maleic acid graft amount from the absorption near 1780 $cm^{-1}$.

<Production Example of Olefin Copolymer (α-1)>

A SUS reactor purged with argon was charged with 386 parts of vinylcyclohexane, which may hereinafter be referred to as VCH, and 3640 parts of toluene. After the temperature was increased to 50˚C, ethylene was fed while the pressure became to 0.6 MPa, and hydrogen was fed while the pressure became to 0.01 MPa. Ten (10) parts of triisobutylaluminum (TIBA) in the form of a toluene solution [produced by Tosoh Finechem Corporation, TIBA concentration 20 wt%] was charged, and then a solution prepared by dissolving 0.0006 part of diethylsilylene(tetramethylcyclopentadienyl)(3-tert-butyl-5-methyl-2-phenoxy)titanium dichloride in 87 parts of dehydrated toluene and a mixture of 0.03 part of N,N-dimethylanilinium tetrakis(pentafluorophenyl)borate and 122 parts of dehydrated toluene were charged therein followed by stirring for 2 hours. To the resulting reaction mixture, 10 parts of ethanol was added to stop the polymerization. Then, ethylene was removed with reduction of the pressure, and the mixture obtained was charged into about 10000 parts of acetone and a white solid precipitated was collected by filtration. The solid was washed with acetone and then dried under reduced pressure. As a result, 300 parts of an olefin copolymer was obtained. The copolymer had an [η] of 0.48 dl/g, an Mn of 15,600, a molecular weight distribution (Mw/Mn) of 2.0, melting point (Tm) of 57˚C, glass-transition temperature (Tg) of -28˚C, and a content of VCH units in the copolymer of 13 mol%.

<Production Example 1 of Polymer (A): (A-1)>

To 100 parts of the resulting olefin-based copolymer were added 0.4 part of maleic anhydride and 0.04 part of 1,3-bis(t-butylperoxyisopropyl)benzene, and after being fully pre-mixed, they were fed through a feeding port of a twin screw extruder and melt-kneaded, so that (A-1), which was one kind of Polymer (A), was obtained. As to the temperature of the extruder's section where melt-kneading was performed, the melt-kneading was divided into two stages, namely, the first half and the second half, the first half was set at 180˚C and the second half was set at 260˚C. The melt kneading was performed under such conditions. The graft amount of maleic acid was 0.2%. MFR of (A-1) was 180 g/10 minutes (at 190˚C, load: 2.16 kgf).

<Production Example of Olefin Copolymer: (α-2)>

A SUS reactor purged with argon was charged with 441 parts of vinylcyclohexane and 947 parts of dehydrated hexane mixture (2-methylpentane, 3-methylpentane, n-hexane, methylcyclopentane and cyclohexane). After charging 350 parts of propylene therein, the temperature was increased to 60˚C. Three (3) parts of triisobutylaluminum (TIBA) in

the form of a hexane solution [produced by Tosoh Finechem Corporation, TIBA concentration 10 wt%] was charged therein, and then a solution prepared by dissolving 0.0010 part of dimethylsilylene(tetramethylcyclopentadienyl)(3-tert-butyl-5 -methyl-2-phenoxy)titanium dichloride in 3.4 parts of dehydrated hexane and a mixture of 0.0064 part of N,N-dimethylanilinium tetrakis(pentafluorophenyl)borate and 3.8 parts of dehydrated hexane were charged therein followed by stirring for 2 hours. To the resulting reaction mixture, 5 parts of ethanol was added to stop the polymerization. Then, propylene was removed with reduction of the pressure, and the reaction liquid obtained was charged into about 5000 parts of acetone and a white solid precipitated was collected by filtration. The solid was washed with acetone and then dried under reduced pressure. As a result, 140 parts of an olefin copolymer (α-2) was obtained. The copolymer had an [η] of 0.65 dl/g and a molecular weight distribution (Mw/Mn) of 1.9, and melting point (Tm) was not observed and its glass-transition temperature (Tg) was -1.2˚C, and a content of VCH units in the copolymer was 4.7 mol%.

<Production Example 1 of Emulsifier (B): (B-1)>

As the monomers of Emulsifier (B), monomers described in Table 1 were used.

[Table 1]

| Kind | Monomer | abbreviation |
|---|---|---|
| α,β-unsaturated carboxylic acid | acrylic acid (manufactured by Mitsubishi Chemical Corporation) | AA |
| α,β-unsaturated carboxylic acid ester formed by an aliphatic alcohol having 1 to 10 carbon atoms and an α,β-unsaturated carboxylic acid | methyl methacrylate (manufactured by Mitsubishi Gas Chemical Company, Inc.) | MMA |
| α,β-unsaturated carboxylic acid ester formed by an aliphatic alcohol having 1 to 10 carbon atoms and an α,β-unsaturated carboxylic acid | lauryl methacrylate (manufactured by Mitsubishi Rayon Co., Ltd.) | SLMA |
| α,β-unsaturated carboxylic acid ester formed by an aliphatic alcohol having 1 to 10 carbon atoms and an amino group and an α,β-unsaturated carboxylic acid | N,N-dimethylaminoethyl methacrylate (manufactured by Sanyo Chemical Industries, Ltd.) | DMA |
| α,β-unsaturated carboxylic acid ester formed by an aliphatic alcohol having 1 to 10 carbon atoms and a carboxylic acid group and an α,β-unsaturated carboxylic acid | 2-merhacryloyloxyethylsuccinic acid (manufactured by Kyoeisha Chemical Co., Ltd.) | HO-MS |

Fourteen point five (14.5) parts (27.6 molar ratio) of "AA", 22.5 parts (13.4 molar ratio) of "HO-MS", 38 parts (33.2 molar ratio) of "DMA", 15 parts (20.6 molar ratio) of "MMA" and 10 parts (5.2 molar ratio) of "SLMA" were mixed at 10 to 30˚C to obtain 100 parts of a monomer mixture. "Molar ratio", herein, represents a molar number when sum of molar numbers of the above-mentioned monomers is 100.

Into a 1 L reactor equipped with a condenser, a nitrogen injection tube, a stirrer, a dropping funnel and a jacket for heating, 150 parts of isopropyl alcohol (hereinafter, it may be described as IPA) and 100 parts of ion-exchanged water were charged to adjust an inner temperature to 80˚C with stirring. The reactor was purged with nitrogen, and then, 20 parts of the monomer mixture was charged at a time. Further, 2 parts of 2,2'-azobisisobutyronitrile was added as a polymerization initiator to stir at the same temperature. The above-mentioned polymerization initiator was added in fourth in an amount of 0.15 part every one hour from starting of addition of the monomer mixture to further stir for 3 hours at the same temperature. Subsequently, the reaction liquid was heated up until such a degree that it boiled to distill IPA away. After distilling away, the inner temperature was decreased to 50˚C, and then, 29 parts (49 molar ratio) of 28% aqueous ammonia solution was mixed therewith to obtain a viscous emulsifier (B). (Yield 90%, hereinafter, described as (B-1)).

<Production Examples 2 and 3 of Emulsifier (B) : (B-2) and (B-3) >

(B-2) and (B-3) were obtained as Emulsifier (B) according to the same manner as Example 1 except that the kinds and amount of the monomers used and the amount of ammonia were changed to those described in Table 2. The results were arranged in Table 2.

[Table 2]

| | | Emulsifier (B) | | | | | |
|---|---|---|---|---|---|---|---|
| | | (B-1) | | (B-2) | | (B-3) | |
| | | Part | Molar ratio | Part | Molar ratio | Part | Molar ratio |
| monomer | AA | 14.5 | 27.6 | 14.5 | 27.6 | 14.5 | 29.2 |
| | HO-MS | 22.5 | 13.4 | 22.5 | 13.4 | 42.5 | 26.8 |
| | DMA | 38 | 33.2 | 38 | 33.2 | 18 | 16.6 |
| | MMA | 15 | 20.6 | 15 | 20.6 | 15 | 21.8 |
| | SLMA | 10 | 5.2 | 10 | 5.2 | 10 | 5.5 |
| | Sum | 100 | 100 | 100 | 100 | 100 | 100 |
| Ammonia water | | 29 | 49 | 37 | 62 | 51 | 84 |
| Aqueous emulsion | Solid content | 45% | | 50% | | 52% | |
| | Yield | 90% | | 91% | | 90% | |

<Production Example of Aqueous emulsion>

(Example 1)

A cylinder temperature of an intermeshing co-rotating twin screw extruder was set at 110˚C. Through a hopper of the extruder, 110 parts of (A-1), which was Polymer (A), was continuously fed at a rotating speed of the screw of 350 rpm to heat (A-1).

Through a feeding port provided in a bent zone of the extruder, 10 parts (solid content) of (B-1), which was Emulsifier (B), was continuously fed with gear pump while pressing, (A-1) and (B-1) were continuously extruded and mixed to obtain a creamy white aqueous emulsion.

The average particle diameter of the aqueous emulsion obtained was 1.0 μm, and in the following adhesiveness evaluation, a peeling was not found at all and it was good.

<Adhesiveness Evaluation>

After washing polypropylene plate (thickness 3 mm: hereinafter, it is called as PP plate) with IPA, an aqueous emulsion was applied onto it using a bar coater so that the thickness of the film after drying became 10 μm, and then, dried for 5 minutes at 80˚C with a hot-air drier followed by further heating and drying it for 30 minutes with oven at 90˚C to obtain a film. The film obtained was cut up on a grid at a 1 mm-clearance interval in accordance with JIS-K5400 (grid peeling tape method test), and scotch tape was put on the film. Next, after 1 to 2 minutes from putting scotch tape, the adhesiveness was evaluated by holding one end of the tape and peeling it to a right angle. The evaluation basis was as followed.
◎: The peeling of the intersection of cuts and each square was not found at all.
○: The peeling area was less than 40% of the area of square.
X: The peeling area was 405 or more of the area of square.

(Example 2)

The cylinder temperature of a desktop-typed kneader PBV-0.3 type available from Irie Shokai Co., Ltd. was set at 97˚C, and then, 110 parts of (A-1) obtained in <Production Example 1 of Polymer (A)> was fed into the cylinder. The resin was melted for 10 minutes with overspin at a rate of 10th rotating per one minute. After melting, 11 parts of (B-2) as the solid content, which was Emulsifier (B), was fed therein and kneading and emulsifying were conducted for 4 minutes at a rate of 60th rotating per one minute while deforming by sometimes opening the cover glasses. Then, 110 parts of hot water at 90˚C was charged therein to disperse to obtain an aqueous emulsion. The average particle diameter and adhesiveness evaluation of the aqueous emulsion were arranged in Table 3.

(Example 3)

An aqueous emulsion was obtained according to the same manner as Example 2 except that (B-3) was used in place of the emulsifier (B-2). The average particle diameter and adhesiveness evaluation of the aqueous emulsion were arranged in Table 3 together with that of Example 1.

(Example 4)

An aqueous emulsion was obtained according to the same manner as Example 2 except that (α-1) was used in place of (A-1) as Polymer (A). The average particle diameter and adhesiveness evaluation of the aqueous emulsion were arranged in Table 3 together with that of Example 1.

(Example 5)

An aqueous emulsion was obtained according to the same manner as Example 2 except that (α-2) was used in place of (A-1) as Polymer (A). The average particle diameter and adhesiveness evaluation of the aqueous emulsion were arranged in Table 3 together with that of Example 1.

[Table 3]

| | | | Ex. 1 | Ex. 2 | Ex. 3 | Ex. 4 | Ex. 5 |
|---|---|---|---|---|---|---|---|
| Aqueous Emulsion | Polymer (A) | Kind | A-1 | A-1 | A-1 | α-1 | α-2 |
| | | MFR | 180 | 180 | 180 | 200 | 62 |
| | | Part | 110 | 110 | 110 | 110 | 110 |
| | Emulsifier (B) | Kind | B-1 | B-2 | B-3 | B-1 | B-1 |
| | | Part (Solid Content) | 10 | 10 | 10 | 10 | 10 |
| | Water | Part | 110 | 110 | 110 | 110 | 110 |
| | Average particle diameter (μm) | | 1.0 | 1.4 | 1.5 | 1.5 | 1.5 |
| Adhesiveness Evaluation | | | ◎ | ◎ | ◎ | ○ | ◎ |

Industrial Applicability

The cured product derived from the aqueous emulsion of the present invention has good adhesiveness to polypropylene which has heretofore been considered as being adhesion-resisting, and therefore, the cured product derived from the aqueous emulsion of the present invention can be suitably used to an adherend layer of polyolefin, such as polypropylene, which has heretofore been considered as being adhesion-resisting.

## Claims

**1.** An emulsion comprising the following (A), (B) and (C) :

(A) an olefin copolymer comprising a structural unit derived from ethylene and/or a linear α-olefin and a structural unit derived from a vinyl compound represented by the formula (I):

$$CH_2=CH-R \qquad (I)$$

wherein R represents a secondary alkyl group, a tertiary alkyl group or a alicyclic hydrocarbon group,
or
a polymer obtained by graft polymerizing an α,β-unsaturated carboxylic acid anhydride to the olefin copolymer,
(B) an acrylic resin comprising a structural unit derived from an α,β-unsaturated carboxylic acid and a structural unit derived from an α,β-unsaturated carboxylic acid ester,
(C) water.

2. The aqueous emulsion according to claim 1, wherein MFR of (A) at 190˚C and 2.16 kgf is 10 to 300.

3. The aqueous emulsion according to claim 1, wherein the vinyl compound represented by the formula (I) is vinylcyclohexane.

4. The aqueous emulsion according to claim 1, wherein the structural unit derived from an α,β-unsaturated carboxylic acid in (B) is a structural unit derived from at least one α,β-unsaturated carboxylic acid selected from the group consisting of acrylic acid and methacrylic acid.

5. The aqueous emulsion according to claim 1, wherein the structural unit derived from an α,β-unsaturated carboxylic acid ester in (B) is a structural unit derived from at least one α,β-unsaturated carboxylic acid ester selected from the group consisting of acrylic acid alkyl ester and methacrylic acid alkyl ester.

6. The aqueous emulsion according to claim 1, wherein the structural unit derived from an α,β-unsaturated carboxylic acid ester in (B) is a structural unit derived from an α,β-unsaturated carboxylic acid ester obtained from an aliphatic alcohol having 1 to 10 carbon atoms and a carboxylic acid group, and an α,β-unsaturated carboxylic acid.

7. The aqueous emulsion according to claim 1, wherein the structural unit derived from an α,β-unsaturated carboxylic acid ester in (B) is a structural unit derived from an α,β-unsaturated carboxylic acid ester obtained from an aliphatic alcohol having 1 to 10 carbon atoms and an amino group, and an α,β-unsaturated carboxylic acid.

8. The aqueous emulsion according to claim 7, wherein (B) is an acrylic resin comprising a structural unit derived from an α,β-unsaturated carboxylic acid and a structural unit derived from an α,β-unsaturated carboxylic acid ester obtained from an aliphatic alcohol having 1 to 10 carbon atoms and an amino group, and an α,β-unsaturated carboxylic acid, and the sum of the amino groups contained in the resin is less than sum of the carboxylic acid groups contained in the resin.

9. The aqueous emulsion according to claim 1, wherein (B) further comprises an ammonium cation.

10. A cured product obtained by drying the aqueous emulsion according to claim 1.

11. A laminate comprising an adherend layer consisting of at least one material selected from the group consisting of a wood-based material, a cellulosic material, a plastic material, a ceramic material and a metallic material and the cured product according to claim 10.

12. A process for producing an aqueous emulsion comprising a step of melt-kneading the following (A), (B) and (C) :

(A) an olefin copolymer comprising a structural unit derived from ethylene and/or linear α-olefin and a structural unit derived from a vinyl compound represented by the formula (I):

$$CH_2=CH-R \qquad (I)$$

wherein R represents a secondary alkyl group, a tertiary alkyl group or a alicyclic hydrocarbon group,
or
a polymer obtained by graft polymerizing an α,β-unsaturated carboxylic acid anhydride to the olefin copolymer,
(B) an acrylic resin comprising a structural unit derived from an α,β-unsaturated carboxylic acid and a structural unit derived from an α,β-unsaturated carboxylic acid ester,
(C) water.

13. A process for producing a laminate comprising a first step of coating the aqueous emulsion according to claim 1 onto an adherend layer consisting of at least one material selected from the group consisting of a wood-based material, a cellulosic material, a plastic material, ceramic material and a metallic material to obtain a coated product having the adherend layer and a layer comprising the aqueous emulsion, and a second step of drying the coated product to obtain a laminate comprising the adherend layer and a cured product layer obtained from the aqueous emulsion.

**INTERNATIONAL SEARCH REPORT**

International application No.
PCT/JP2009/066057

A. CLASSIFICATION OF SUBJECT MATTER
*C08L23/26*(2006.01)i, *B32B27/30*(2006.01)i, *B32B27/32*(2006.01)i, *C08J7/04*(2006.01)i, *C08L23/08*(2006.01)i, *C08L33/04*(2006.01)i

According to International Patent Classification (IPC) or to both national classification and IPC

B. FIELDS SEARCHED

Minimum documentation searched (classification system followed by classification symbols)
C08L23/26, B32B27/30, B32B27/32, C08J7/04, C08L23/08, C08L33/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-169380 (Sumika Chemtex Co., Ltd.), 24 July 2008 (24.07.2008), claims; paragraphs [0001], [0002], [0004], [0017], [0021] to [0023], [0037], [0038], [0044], [0045], [0058], [0064], [0066]; examples<br>& WO 2008/072760 A1 & EP 2096138 A | 1-6,10,11<br>7-9 |
| X<br>Y | JP 2008-063557 (Sumitomo Chemical Co., Ltd.), 21 March 2008 (21.03.2008), claims; paragraphs [0001], [0004], [0007], [0011] to [0013], [0026], [0027], [0034], [0042], [0055], [0056]<br>& WO 2007/123071 A1 & EP 2014719 A1<br>& US 2009/0186232 A & KR 10-2009-0006121 A<br>& CN 101460565 A | 1-6,10,11<br>7-9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 December, 2009 (07.12.09) | 15 December, 2009 (15.12.09) |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/066057

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-024755 (Chuo Rika Kogyo Corp.), 07 February 2008 (07.02.2008), claims; paragraphs [0001], [0013], [0018], [0050] (Family: none) | 7-9 |
| P,A | JP 2009-172503 (Chuo Rika Kogyo Corp.), 06 August 2009 (06.08.2009), claims; paragraphs [0001], [0014], [0016], [0025], [0026], [0071]; examples (Family: none) | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEISEI57832 A
- JP 2003082028 A
- JP 2003160621 A
- JP 2000128932 A